(19) Europäisches Patentamt
European Patent Office
Office européen des brevets

(11) **EP 2 710 555 B1**

(12) **FASCICULE DE BREVET EUROPEEN**

(45) Date de publication et mention
de la délivrance du brevet:
**16.09.2015 Bulletin 2015/38**

(21) Numéro de dépôt: **12721490.6**

(22) Date de dépôt: **10.05.2012**

(51) Int Cl.:
*G06T 7/00* (2006.01)      *G06T 5/50* (2006.01)
*B60C 25/00* (2006.01)      *G01M 17/02* (2006.01)

(86) Numéro de dépôt international:
**PCT/EP2012/058605**

(87) Numéro de publication internationale:
**WO 2012/156260 (22.11.2012 Gazette 2012/47)**

(54) **MÉTHODE DE DÉTERMINATION DES ÉLÉMENTS EN RELIEF PRÉSENTS SUR LA SURFACE D'UN PNEUMATIQUE**

VERFAHREN ZUR BESTIMMUNG VON RELIEFELEMENTEN AUF DER FLÄCHE EINES REIFENS

METHOD FOR DETERMINING ELEMENTS IN RELIEF ON THE SURFACE OF A TYRE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **19.05.2011 FR 1154346**

(43) Date de publication de la demande:
**26.03.2014 Bulletin 2014/13**

(73) Titulaires:
 • **Compagnie Générale des Etablissements
   Michelin
   63000 Clermont-Ferrand (FR)**
 • **MICHELIN Recherche et Technique S.A.
   1763 Granges-Paccot (CH)**

(72) Inventeurs:
 • **NOYEL, Guillaume
   63040 Clermont-Ferrand Cedex 9 (FR)**
 • **ZANELLA, Jean-Paul
   63040 Clermont-Ferrand Cedex 9 (FR)**
 • **JOLY, Alexandre
   63040 Clermont-Ferrand Cedex 9 (FR)**

(74) Mandataire: **Roussy, Delphine
Manufacture Française des
Pneumatiques Michelin
23, place des Carmes-Déchaux
DGD/PI - F35 - Ladoux
63040 Clermont-Ferrand Cedex 9 (FR)**

(56) Documents cités:
   **US-A1- 2005 259 859      US-B1- 6 539 789**

 • **DENGLER J ET AL: "SEGMENTATION OF
   MICROCALCIFICATIONS IN MAMMOGRAMS",
   IEEE TRANSACTIONS ON MEDICAL IMAGING,
   IEEE SERVICE CENTER, PISCATAWAY, NJ, US,
   vol. 12, no. 4, 1 décembre 1993 (1993-12-01),
   pages 634-642, XP000447010, ISSN: 0278-0062,
   DOI: 10.1109/42.251111**
 • **VINCENT L: "MORPHOLOGICAL GRAYSCALE
   RECONSTRUCTION IN IMAGE ANALYSIS:
   APPLICATIONS AND EFFICIENT ALGORITHMS",
   IEEE TRANSACTIONS ON IMAGE PROCESSING,
   IEEE SERVICE CENTER, PISCATAWAY, NJ, US,
   vol. 2, no. 2, 1 avril 1993 (1993-04-01), pages
   176-201, XP000380857, ISSN: 1057-7149, DOI:
   10.1109/83.217222**

**Description**

L'invention concerne le domaine de la fabrication des pneumatiques, et s'inscrit de manière plus générale dans le cadre des opérations de contrôle de l'aspect extérieur ou de l'intérieur des pneumatiques en cours ou en fin du processus de fabrication, dans le but d'en déterminer la conformité par rapport à des références de contrôle.

Les moyens industriels de contrôle automatiques des pneumatiques développées par les manufacturiers et destinés notamment à assister les opérateurs chargés du contrôle visuel, font largement appel à des techniques de traitement d'image.

Les méthodes employées pour effectuer ces traitements consistent, en règle générale, à comparer une image en deux ou préférentiellement en trois dimensions de la surface du pneumatique à inspecter, avec une image de référence en deux et préférentiellement en trois dimensions de la surface dudit pneumatique.

Une des étapes de ce processus consiste, de manière connue, à acquérir l'image en trois dimensions de la surface du pneumatique, à l'aide par exemple, de moyens basés sur le principe de la triangulation optique, mettant par exemple en oeuvre un capteur 2D couplé à une source d'éclairage de type laser.

L'image topographique de la surface du pneumatique, est en règle générale une image bidimensionnelle, dite à niveau de gris, dans laquelle, à tout point, i.e. à tout pixel (x, y) de l'image, est associé une valeur f(x, y), appelée niveau de gris, qui représente l'altitude de ce point par rapport à la surface. Cette valeur de niveau de gris peut utilement être codée sur 8, ou 16 bits voire 32 bits pour une meilleure dynamique. Pour un codage sur 8 bits, la valeur 255 (blanc) correspond à l'altitude la plus haute, et la valeur 0 (noir), correspond à l'altitude la plus basse.

La poursuite du processus d'analyse de l'image obtenue consiste alors, entre autre, à déterminer les éléments en relief de la surface à inspecter. Cette étape est particulièrement importante dans le cadre de l'analyse de la partie interne du pneumatique en ce que, les stries ou les motifs en relief destinés à assurer le drainage de l'air pendant la cuisson du pneumatique doivent être précisément localisés et identifiés, afin de ne pas être considérés comme des anomalies de ladite surface.

Ces stries ou ces motifs en relief dépassent de quelques dixièmes de millimètre la surface moyenne de la partie interne du pneumatique.

La méthode selon l'invention a pour objet d'apporter une solution à ce problème.

Cette méthode d'extraction des éléments en relief figurant sur la surface d'un pneumatique repose sur l'assimilation de l'image en niveau de gris figurant les reliefs à une image en noir et blanc, sur laquelle il devient possible d'utiliser largement les propriétés des opérateurs morphologiques, après les voir adaptés aux spécificités du pneumatique, pour extraire les informations recherchées.

Les opérateurs morphologiques couramment utilisés sont des ouvertures et des fermetures morphologiques, des dilatations ou des érosions morphologiques, utilisant des éléments structurants adaptés.

Un élément structurant est un ensemble, de taille et de forme appropriés, utilisé pour sonder l'image étudiée. On peut le voir comme un outils qui permettrait d'éroder (i.e. enlever de la matière) ou de dilater (i.e. ajouter de la matière) à une image.

Ainsi, la dilatation de la fonction $f$ (i.e. l'image à niveaux de gris) par un élément structurant $B$, notée $\delta_B(f)$, est la fonction qui donne à tout pixel $x \in E$ la valeur maximale ou de manière plus générale le suprémum noté sup, de l'image $f$ dans la fenêtre d'observation définie par B telle que : $\delta_B(f)(x) = sup\{f(x\text{-}y), y \in B\}$.

De la même manière, l'érosion de la fonction $f$ (i.e. l'image à niveaux de gris) par l'élément structurant B, notée $\varepsilon_B(f)$, est la fonction qui donne à tout pixel $x \in E$ la valeur minimale, ou de manière plus générale l'infimum noté inf, de l'image f dans la fenêtre d'observation définie par $B$ : $\varepsilon_B(f)(x) = inf\{f(x\text{-}y), y \in B\}$.

Une ouverture morphologique par adjonction $\gamma_B$ est définie comme la composition d'une érosion $\varepsilon_B$ avec une dilatation $\varepsilon_B$ pour un élément structurant $B$ telle que : $\gamma_B(f) = \delta_{B^\circ}\varepsilon_B(f)$. A l'inverse, une fermeture morphologique $\phi_B$ est définie comme la composition d'une dilatation $\delta_B$ avec une érosion $\varepsilon_B$ pour un élément structurant $B$, telle que : $\phi_B(f) = \varepsilon_{B^\circ}\delta_B(f)$.

L'opération qui consiste à faire la différence entre une image $f$ et la transformée de cette image par ouverture morphologique $\gamma_B$ à l'aide d'un élément structurant $B$, connue également sous le nom de top-hat par ouverture, est notée $TH_B(f) = f\text{-}\gamma_B(f)$. Cet opérateur morphologique a pour effet d'extraire les pics, mais ne permet pas d'éliminer les pics très localisés pouvant être assimilés à des bruits.

Aussi, il peut s'avérer utile de filtrer l'image en choisissant pour chaque pixel la valeur minimale, ou infimum, noté $\wedge$, entre la composition d'une ouverture morphologique et d'une fermeture morphologique de l'image $f$ à l'aide des éléments structurants $B1$ et $B2$, $\gamma_{B1}(\phi_{B2}(f))$, et la valeur de ce pixel dans l'image de départ $f$. Cette opération est notée $(\gamma_{B1}(\phi_{B2}(f)))\wedge(f)$.

On définit alors l'opération morphologique nommée top-hat par ouverture avec filtrage, qui combine les opérateurs précédents, et qui est notée $FTH(f)=f\text{-}((\gamma_{B1}(\phi_{B2}(f)))\wedge f)$. Cette opération morphologique permet d'extraire les pics et de filtrer les valeurs anormales correspondant aux pics localisés.

La dilatation géodésique qui a pour objet de reconstruire un masque, consiste pour un motif discret Y de l'image faisant office de marqueur, inclus dans un motif discret X de la même image, à faire grossir ledit élément Y à l'aide d'un élément structurant *B*, en ne considérant que la seule partie de Y à la taille augmentée incluse dans le masque X. La dilatation unitaire est définie par $\delta_X(Y) = \delta_B(Y) \cap X$.

L'application itérative de cette opération de dilatation jusqu'à l'idempotence a pour effet de reconstituer le masque *X* sans en modifier sa forme. Cet opérateur morphologique de reconstruction qui permet de ne conserver dans une image de départ que les seuls éléments identifiés à partir de marqueurs *Y*, est noté

$$R_X^{\delta}\left(Y\right) = \delta_X^{\infty}\left(Y\right) = \delta_X^{n}\left(Y\right), \text{ tel que } \delta_x^{n}\left(y\right) = \delta_x^{n+1}\left(y\right) \text{ avec } \delta_x^{n}\left(y\right) = \delta_x^{1}\delta_x^{1}.......\delta_x^{1}\left(y\right) \text{ (n pois) la}$$

dilatation géodésique de taille n, et $\delta_x^{1}\left(y\right) = \delta_B\left(y\right) \cap X$ la dilatation géodésique unitaire.

Enfin, l'opération de seuillage consiste à transformer une image de sorte que, pour chaque pixel, la valeur maximale de niveau de gris (correspondant à la couleur blanche) est attribuée si la valeur de niveau de gris de ce pixel est comprise entre deux valeurs de seuils [$u_1, u_2$] données, et à la valeur nulle (correspondant à la couleur noire) dans le cas contraire. Cette opération est notée $T_{[u_1, u_2]}(f(x)) = \begin{cases} 256 & \text{si } u_1 \leq f(x) \leq u_2 \\ 0 & \text{sinon} \end{cases}$ . En règle générale $u_1$ est

égal à zéro et la valeur du seuil est donnée par $u_2$. De manière complémentaire, pour obtenir un seuillage plus robuste, l'opération de seuillage par hystérésis, notée $T_{<\sin f,\ ssup>}$, est un seuillage suivi d'une reconstruction de la segmentation avec le seuil le plus bas *sinf* à partir de la segmentation avec le seuil le plus haut *ssup*.

La méthode selon l'invention prévoit les étapes au cours desquelles :

A- on capture l'image tridimensionnelle de ladite surface en affectant à chaque pixel (i, j) de l'image une valeur de niveau de gris proportionnelle à l'élévation topographique de ce point, pour obtenir une image de départ,

B- à l'aide d'un élément structurant, on transforme l'image de départ par un premier top-hat, de manière à obtenir une image mise à plat par différence,

C- à l'aide d'un premier et d'un second élément structurant, on transforme l'image mise à plat par différence par un deuxième top-hat avec filtrage pour obtenir une image filtrée faisant office de marqueur, et on reconstruit l'image mise à plat par différence à partir des marqueurs contenus dans l'image filtrée pour former une image filtrée reconstruite.

D- à l'aide d'éléments structurant de tailles, de formes et d'orientation données, on transforme successivement l'image filtrée reconstruite par une série de top-hat avec filtrage pour obtenir une série d'images mises à plat filtrées,

E- on réalise un seuillage de l'image mise à plat par différence, pour obtenir une image segmentée, de sorte que les éléments en relief apparaissent en blanc sur fond noir.

Préalablement à l'étape B, il est avantageux pour faciliter les calculs, de dérouler l'image de la surface dans un repère orthogonal dans lequel l'axe des abscisses représente les valeurs circonférentielles, et l'axe des ordonnées représente les valeurs radiales.

La taille et la forme de l'élément structurant servant à réaliser le premier top-hat de l'étape B peut avantageusement avoir une forme linéaire ou avoir la forme d'un rectangle, et dont la taille est choisie de sorte que la longueur de l'élément structurant linéaire ou le grand côté du rectangle, orientés dans la direction circonférentielle, comprenne un nombre de pixels correspondant à une longueur comprise entre 4 et 15 mm, et que le petit coté du rectangle comprenne un nombre de pixels correspondant à une longueur comprise entre 0,1 mm et 0,3 mm.

Au cours de l'étape C :

- le premier élément structurant utilisé pour l'opération morphologique de fermeture ait la forme d'un rectangle, dont la taille est choisie de sorte que le grand coté du rectangle, orienté dans le sens circonférentiel, comprenne un nombre de pixels correspondant à une longueur comprise entre 1 et 5 mm, et que le petit coté du rectangle comprenne un nombre de pixels correspondant à une longueur comprise entre 1 et 2 mm, et

- le second élément structurant utilisé pour l'opération morphologique d'ouverture ait également la forme d'un rectangle, dont la taille est choisie de sorte que le grand coté du rectangle, orienté dans le sens circonférentiel, comprenne un nombre de pixels correspondant à une longueur comprise entre 4 et 15 mm, et que le petit coté du rectangle comprenne un nombre de pixels correspondant à une longueur comprise entre 1 mm et 2 mm.

Au cours de l'étape D, on peut avantageusement effectuer le seuillage du niveau de gris en choisissant une valeur de seuil correspondant à une variation de hauteur supérieure ou égale à 0,15 mm.

Au cours de cette étape D, la taille des éléments structurant est choisie avantageusement de sorte que le petit côté du rectangle comprenne un nombre de pixels correspondant à une longueur comprise entre 0,03 mm et 2 mm, et que le grand coté du rectangle ou la longueur de l'élément structurant comprenne un nombre de pixels correspondant à une longueur comprise entre 0,3 mm et 10 mm.

Les éléments structurants utilisés au cours de l'étape E pour ces opérations successives ont avantageusement une forme linéaire ou la forme d'un rectangle, et peuvent être orientés dans la direction circonférentielle ou radiale.

Avantageusement, à l'issue de l'étape E, on peut définir des facteurs de forme des éléments apparaissant en blanc sur l'image segmentée.

Avantageusement, on ne conserve que les objets dont les facteurs de forme correspondent à des valeurs prédéterminées.

Avantageusement, les facteurs de formes sont l'orientation angulaire principale de la forme, et/ou l'aire de la forme, et/ou l'excentricité d'une l'ellipse englobant ladite forme.

Pour éviter les discontinuités liées à la déradialisation de l'image, préalablement à la recherche des facteurs de forme, on peut avantageusement augmenter circonférentiellement l'image segmentée d'une zone de recouvrement correspondant à un secteur angulaire de longueur prédéfinie et partant de l'origine (O).

La méthode selon l'invention s'applique avantageusement à la surface intérieure du pneumatique, de sorte que les éléments en relief sont des stries.

La description qui suit a pour objet de donner les indications détaillées sur la mise en oeuvre de la méthode, et s'appuie sur les figures 1 à 10, dans lesquelles :

- la figure 1 représente une image bidimensionnelle à niveau de gris de la surface topographique interne d'un pneumatique,
- la figure 2 représente la même image après un premier top-hat,
- la figure 3 représente l'image de la figure 2 après un deuxième top-hat avec filtrage,
- la figure 4 représente l'image de la figure 3 après reconstruction,
- la figure 5 représente l'image de la figure 4 après un top-hat avec filtrage,
- la figure 6 représente l'image de la figure 5 après un top-hat avec filtrage à l'aide d'éléments structurant orientés sensiblement dans la direction radiale,
- la figure 7 représente l'image de la figure 6 après un top-hat avec filtrage à l'aide d'éléments structurant orientés sensiblement dans la direction circonférentielle,
- la figure 8 représente l'image de la figure 7 après seuillage,
- la figure 9 représente l'image de la figure 8 après élimination des éléments dont le facteur de forme n'est pas compris dans les limites prédéterminées,
- la figure 10 représente un diagramme fonctionnel du traitement de l'image de départ selon l'invention.

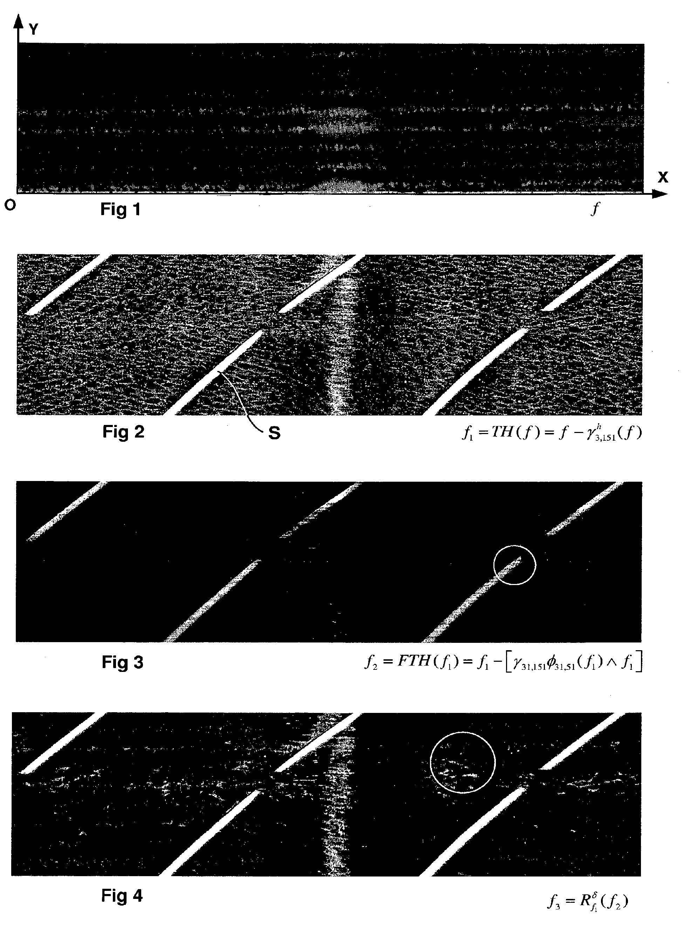

L'image de la figure 1 représente une vue partielle de l'image de la partie interne d'un pneumatique. Cette image est obtenue à l'aide d'un moyen faisant appel à des technologies connues en elles-mêmes, telles que la triangulation laser.

En règle générale, l'image bidimensionnelle de la surface topographique d'un pneumatique est une image du relief en niveau de gris, telle que représentée à la figure 1, dans laquelle, à tout point ou pixel $x = (i, j)$ du plan ($E = [1,2,...] \times [1,2,...]$, avec $E \subset \square^2$) représenté sous forme d'une grille de point (c'est-à-dire un tableau 2D), est associé une valeur $f(x) \subset T$ avec $T \subset \square$. Généralement, T est constituée de valeurs entières comprises entre 0 et 255. La valeur 0 correspond à la couleur noire, et la valeur 255 correspond à a la couleur blanche.

Pour un pneumatique tourisme de dimension standard on calibre l'image de manière à ce que la variation d'une unité de niveau de gris corresponde à une hauteur de 0,01 mm environ.

Le nombre de pixels de l'image, dépend naturellement du choix de la caméra utilisée, et du mode de saisie, mais il est courant de réaliser des images comprenant 40 000 x 5000 pixels pour représenter l'ensemble de la surface intérieure du pneumatique.

Pour des raisons de commodité de calcul on transforme les coordonnées polaires de l'image circulaire du flanc du pneumatique en coordonnées orthogonales. L'image de la figure 1 est représentée dans ledit repère orthogonal, dans lequel l'axe des abscisses OX représente les valeurs circonférentielles, et l'axe des ordonnées OY représente les valeurs radiales.

L'objet de l'invention est de mettre en valeur, les éléments en relief présents à la surface d'un pneumatique. Bien qu'il soit possible de mettre en oeuvre la méthode selon l'invention sur la plupart des zones de la surface du pneumatique, la présente description s'intéresse plus particulièrement au traitement de l'image de l'intérieur du pneumatique et, dans le cas d'espèce, à la détection des stries présentes sur ladite surface intérieure.

La méthode selon l'invention, comme cela a déjà été évoqué, propose de réaliser des transformations de l'image à l'aide d'opérateurs morphologiques en assimilant les variations de hauteur, i.e. les reliefs, à des variations de niveau de gris.

Le premier opérateur morphologique utilisé est un top-hat à l'aide d'un élément structurant essentiellement circonférentiel, de manière à supprimer le bombé du flanc assimilé ici à la géométrie du flanc dans un plan radial. L'image résultante, $f_1 = f - \gamma_{3,151}(f)$ est illustrée à la figure 2. Cette image représente une vue intérieure du pneumatique mise à plat dans laquelle les stries S, qui sont en relief par rapport à la surface interne, apparaissent en couleur blanche.

La taille et la forme de l'élément structurant sont adaptées pour ne retenir que les reliefs correspondant à des stries, dont la largeur dans le sens circonférentiel n'excède pas quelques millimètres. On retiendra un élément structurant ayant la forme d'un rectangle, dont le grand coté est orienté dans la direction circonférentielle, et dont la taille est choisie de sorte que le petit côté du rectangle comprenne un nombre de pixels correspondant à une longueur comprise entre 0,1 mm et 0,3 mm et que le grand côté du rectangle comprenne un nombre de pixels correspondant à une longueur comprise entre 4 mm et 15 mm. Pour plus de précision, il serait possible de choisir un élément structurant linéaire, orienté dans la direction circonférentielle, de même taille que le grand côté du rectangle. Dans le cas d'espèce, c'est un rectangle de 3x151 pixels qui est retenu.

Par commodité, on choisira de préférence un nombre impair de pixels de manière à mieux centrer l'élément structurant sur le pixel à analyser.

Il est possible, dès ce stade de la mise en oeuvre de la méthode selon l'invention, d'extraire lesdites stries de l'image en effectuant un seuillage par hystérésis, $T_{<1,30>}(f_1) = seg_1$ pour obtenir l'image segmentée recherchée dans laquelle les stries apparaissent en blanc sur fond noir.

Dans le cas d'un pneumatique de dimension courante, en considérant que les stries ont une hauteur moyenne de 0,8 mm, le seuil de niveau de gris, correspond à une variation de hauteur supérieure ou égale à 0,15 mm soit, une variation d'une quinzaine de niveau de gris.

Toutefois, on observe que l'image de la surface intérieure est susceptible de présenter des irrégularités qu'il convient de filtrer de manière à obtenir une image segmentée finale ne faisant apparaître que les éléments en relief recherchés. Ces irrégularités proviennent par exemple, des pics anormaux introduits lors de la réalisation de l'image, de la variation circonférentielle du bombé, de bosses ou de creux localisés provoqués par les effets du moulage des sculptures et connu sous le nom de cabossage, ou encore de la présence localisée de surépaisseurs provenant des jonctions internes des produits.

Aussi, il peut s'avérer particulièrement intéressant de filtrer ces irrégularités à l'aide d'opérateurs morphologiques adaptés à la taille et à la localisation préférentielle de ces irrégularités sur la surface interne du pneumatique.

Une première opération peut consister à filtrer les bruits localisés de taille réduite mais de forte amplitude.

Pour ce faire, on transformera l'image mise à plat par différence, $f_1$, à l'aide d'un deuxième top-hat avec filtrage, $f_2 = FTH(f_1) = f_1 - ((\gamma_{31,151}(\phi_{31,51}(f_1))) \wedge f_1)$. On observe, dans l'image résultante reproduite à la figure 3, que les anomalies isolées ont été supprimées, et que les stries apparaissent clairement.

Dans le cas d'espèce on choisit un élément structurant de forme rectangulaire dont la taille correspond à la taille des anomalies que l'on cherche à filtrer.

Pour l'opération morphologique de fermeture, on utilisera un premier élément structurant dont le grand coté est orienté dans le sens circonférentiel, correspondant à l'axe OX, et dont la taille est choisie de sorte que le petit côté du rectangle comprenne un nombre de pixels correspondant à une longueur comprise entre 1 mm et 2 mm, et que le grand côté du rectangle comprenne un nombre de pixels correspondant à une longueur comprise entre 1 mm et 5 mm. Dans le cas d'espèce, un rectangle d'environ 30x50 pixel donne de bons résultats.

Pour l'opération morphologique d'ouverture, on utilisera un second élément structurant dont le grand coté est orienté dans le sens circonférentiel, correspondant à l'axe OY, et dont la taille est choisie de sorte que le petit côté du rectangle comprenne un nombre de pixels correspondant à une longueur comprise entre 1 et 2 mm, et que le grand côté du rectangle comprenne un nombre de pixels correspondant à une longueur comprise entre 4 mm et 15 mm. Dans le cas d'espèce servant de support à la présente description, c'est un rectangle d'environ 30x150 pixels qui a été retenu.

On observe toutefois que les bords et les extrémités des stries ont été partiellement gommés. Ces altérations sont entourées d'un rond blanc sur la figure 3.

On se sert alors des structures subsistant dans l'image $f_2$ comme marqueur pour reconstituer les structures d'intérêt de l'image $f_1$, en reconstruisant l'image $f_1$ à l'aide de l'opérateur morphologique du même nom. L'image résultante, $f_3 = R_{f_1}^{\delta}(f_2)$, est reproduite à la figure 4.

Consécutivement à l'opération de reconstruction décrite ci-dessus, on peut utilement appliquer une série de filtres supplémentaires pour éliminer les bosses et les creux évoqués précédemment.

De manière similaire aux opérations déjà décrites on transforme successivement l'image à l'aide de top-hat avec filtrage en adaptant les éléments structurants à la forme des objets recherchés.

A titre d'exemple, on peut souhaiter éliminer les motifs entourés d'un rond blanc à la figure 4.

Ces motifs ont la forme générale de marbrures superficielles et sont en léger relief par rapport à la surface intérieure. Ce réseau alvéolaire superficiel a pour fonction, lors de la cuisson, de drainer les inclusions d'air vers les stries. Bien qu'aléatoire, la forme des cellules est assez régulière. On choisira en conséquence la taille et la forme des éléments structurants utilisés pour les opérations de fermeture et d'ouverture morphologique. Bien qu'une forme circulaire ou ellipsoïdale puisse aussi bien convenir, pour autant que ladite forme ait une surface apte à recouvrir toutes les formes d'alvéoles, on choisira par commodité des éléments structurants de forme rectangulaire dont le grand coté est orienté dans la direction circonférentielle.

Dans l'exemple servant de support à la présente description :

- la taille de l'élément structurant utilisé pour l'opération morphologique de fermeture est choisie de sorte que le petit côté du rectangle comprenne un nombre de pixels correspondant à une longueur comprise entre 1 et 2 mm, et que le grand coté du rectangle comprenne un nombre de pixels correspondant à une longueur comprise entre 1,5 mm et 3 mm soit, dans le cas d'espèce une rectangle de 31x51 pixels, et

- la taille de l'élément structurant utilisé pour l'opération morphologique d'ouverture est choisie de sorte que le petit côté du rectangle comprenne un nombre de pixels correspondant à une longueur comprise entre 1 mm et 2 mm, et que le grand coté du rectangle comprenne un nombre de pixels correspondant à une longueur comprise entre 4 mm et 15 mm soit, dans le cas d'espèce un rectangle de 31x151 pixels.

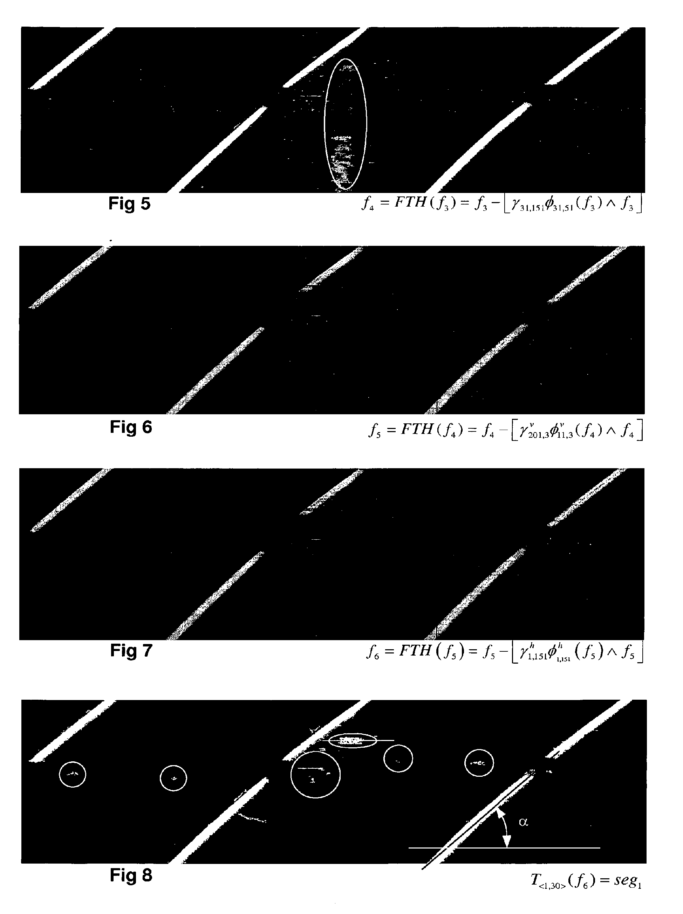

L'image résultante, $f_4 = FTH(f_3) = f_3 - \left( \left( \gamma_{31,151}^h \left( \phi_{31,51}^h (f_3) \right) \right) \wedge f_3 \right)$, est reproduite à la figure 5.

Cette image laisse encore apparaître une trace radiale, entourée d'une ellipse, et provenant d'une irrégularité localisée engendrée par une jonction de produits.

De la même manière que précédemment, on procède à un nouveau traitement de l'image par top-hat avec filtrage en adaptant la taille et la forme des éléments structurants à l'élément que l'on veut extraire ou à ceux que l'on veut supprimer. Pour alléger les temps de calcul on choisira des éléments structurants de forme rectangulaire ou linéaire.

Dans l'exemple servant de support à la présente description :

- l'élément structurant utilisé pour l'opération morphologique de fermeture a son grand côté orienté dans le sens radial, i.e. selon l'axe OY, et sa taille est choisie de sorte que le petit côté du rectangle comprenne un nombre de pixels correspondant à une longueur comprise entre 0,1 mm et 0,3 mm, et que le grand côté du rectangle comprenne un nombre de pixels correspondant à une longueur comprise entre 0,3 mm et 1 mm soit, dans le cas d'espèce, un rectangle de 11x3 pixels, et

- l'élément structurant utilisé pour l'opération morphologique d'ouverture a également son grand coté orienté dans le sens radial, et sa taille est choisie de sorte que le petit côté du rectangle comprenne un nombre de pixels correspondant à une longueur comprise entre 0,1 mm et 0,3 mm, et que le grand côté du rectangle comprenne un nombre de pixels correspondant à une longueur comprise entre 5 et 15 mm soit, dans le cas d'espèce, un rectangle de 200x3 pixels.

Des éléments structurant linéaires, orientés dans la direction radiale et de longueur correspondant aux grands côtés des rectangles ci-dessus pourraient tout aussi bien convenir.

L'image résultante de cette transformation morphologique,

$$f_5 = FTH(f_4) = f_4 - \left( \left( \gamma_{201,3}^v \left( \phi_{11,3}^v (f_4) \right) \right) \wedge f_4 \right)$$ est reproduite à la figure 6. La traînée radiale a été sensiblement atténuée.

Toujours dans la même logique, on peut encore filtrer l'image à l'aide d'un top-hat pour supprimer le résidu du bombé radial. Les éléments structurants ont une forme rectangulaire ou linéaire.

Dans le cas d'espèce, on choisit des éléments structurants linéaires orientés dans la direction circonférentielle :

- l'élément structurant utilisé pour l'opération morphologique de fermeture comprend un nombre de pixels correspondant à une longueur comprise entre 4 et 10 mm soit, dans le cas d'espèce, un segment de 50 pixels et

- l'élément structurant utilisé pour l'opération morphologique d'ouverture comprend un nombre de pixels correspondant à une longueur comprise entre 4 et 15 mm soit dans le cas d'espèce un segment de 150 pixels.

L'image résultante, $f_6 = FTH(f_5) = f_5 - \left( \left( \gamma_{1,151}^h \left( \phi_{1,151}^v (f_5) \right) \right) \wedge f_5 \right)$ est reproduite à la figure 7.

Le nombre de top-hat avec filtrage n'est pas limitatif et doit être adapté aux éléments que l'on souhaite extraire de l'image. Dans le cas servant de support à la présente description il a été procédé à trois opérations de filtrage successives.

On procède alors à l'opération de segmentation par seuillage par hystérésis de l'image filtrée $f_6$ , $T_{<1,30>}$ ($f_6$) = $seg_6$, dont le résultat est reproduit à la figure 8. Le seuil de niveau de gris, a une valeur identique à la valeur retenue précédemment et correspond à une variation de hauteur supérieure ou égale à 0,15mm soit, une variation d'une quinzaine de niveau de gris.

L'image résultante de la figure 8 fait apparaître en blanc sur fond noir les motifs en relief recherchés, dans le cas présent les stries. On observe que subsistent encore des éléments entourés d'un cercle et qui ne correspondent pas aux stries recherchées.

La méthode selon l'invention propose alors de procéder à une opération de filtrage supplémentaire pour extraire ces éléments indésirables, en se basant sur le fait que les éléments recherchés ont les facteurs de forme différents des facteurs de forme des éléments que l'on désire éliminer. On remarque en effet, dans le cas d'espèce, que les stries ont une forme allongée et font un angle donné relativement constant et connu avec la direction circonférentielle.

Pour évaluer ces facteurs de forme on peut par exemple chercher à inclure chacune de ces formes dans une ellipse englobante comme cela est illustré à la figure 8.

On détermine alors l'angle α formé par le grand axe de l'ellipse englobante avec la direction circonférentielle, i.e. l'axe OX, qui représente la direction principale de la strie, et on ne retient que les formes pour lesquelles cet angle est compris dans des limites prédéterminées.

On peut également, et de manière additionnelle, calculer l'excentricité de l'ellipse englobante et considérer que les stries, de forme allongée, ont une excentricité supérieure à un seuil donné. On exclut alors les éléments ne répondant pas à ce critère.

On peut encore calculer la superficie de l'élément figurant en blanc sur l'image segmentée, et extraire tous les éléments qui n'ont pas une aire supérieure à un seuil donné.

Pour effectuer ces opérations sur les formes, il importe de modifier l'image à traiter pour tenir compte de la circularité de la représentation; à savoir que, dans le repère choisi, le bord extrême de l'image dans la direction circonférentielle correspond au bord de l'image d'abscisse nulle augmenté d'une rotation de $2\pi$. Pour ce faire, on forme une image composée des zones de recouvrement des deux côtés de l'extrémité circonférentielle de l'image ; cette nouvelle image est notée $seg^{recouvrement}$.

Lors de la suppression des éléments ne correspondant pas aux critères souhaités, on gère de manière distincte la zone de recouvrement, $seg^{recouvrement}$, en modifiant certains seuils comme le calcul de l'aire minimale, afin de ne pas exclure une partie de strie apparaissant aux deux extrémités de l'image et dont l'aire serait coupée en deux.

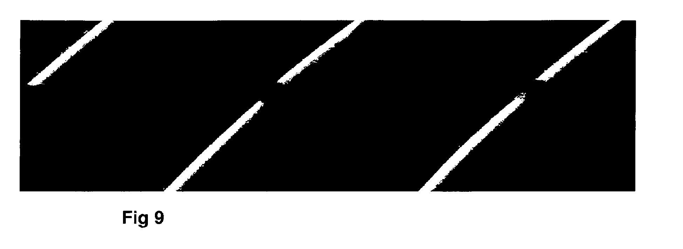

La figure 9 reproduit l'image obtenue après application de ce dernier traitement, et dans laquelle, seules les stries subsistent, alors que tous les éléments indésirables ont été supprimés.

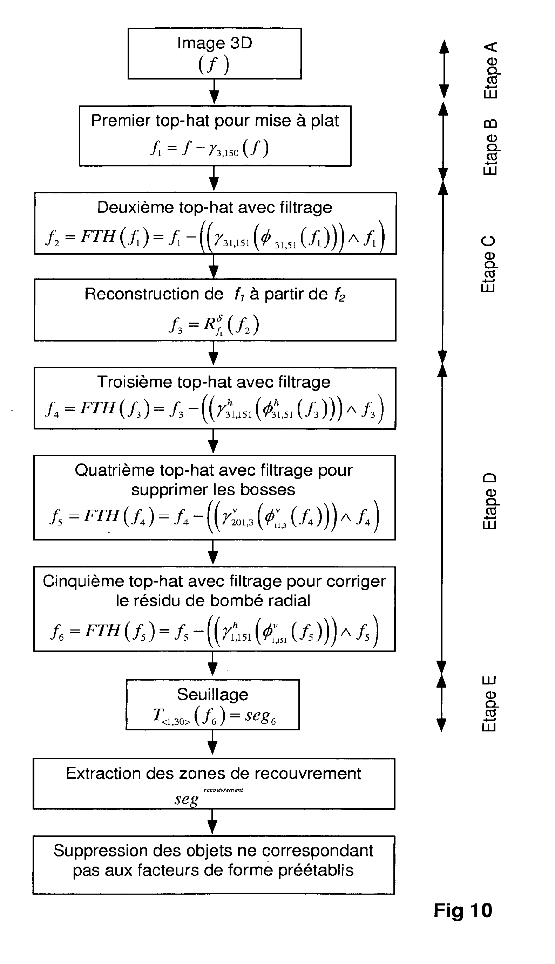

La figure 10, illustre de manière synthétique les étapes de mise en oeuvre de l'invention dans le cas de l'exemple servant de support à la présente description.

Il devient alors possible d'extraire les motifs et de procéder aux traitements ultérieurs de l'image en vue de déterminer la conformité du pneumatique.

L'exemple de mise en oeuvre de la méthode selon l'invention n'est pas limitatif et pourra être adapté selon les indications données pour répondre à l'analyse des pneumatiques de tailles et d'usage variés en prenant en compte les spécificités des motifs en relief que l'on cherche à extraire et de ceux que l'on cherche à éliminer.

**Revendications**

1. Méthode d'extraction des éléments en relief figurant sur la surface d'un pneumatique comprenant les étapes au cours desquelles :

   A- on capture l'image tridimensionnelle de ladite surface en affectant à chaque pixel (i, j) de l'image une valeur de niveau de gris proportionnelle à l'élévation topographique de ce point, pour obtenir une image de départ ($f$),
   B- à l'aide d'un élément structurant, on transforme l'image de départ ($f$) par un premier top-hat, de manière à obtenir une image ($f_1$) mise à plat par différence, ($f_1 = f - \gamma_{3,151}(f)$),
   C- à l'aide d'un premier et d'un second élément structurant, on transforme l'image mise à plat par différence ($f_1$) par un deuxième top-hat avec filtrage pour obtenir une image filtrée faisant office de marqueur ( $f_2 = FTH(f_1)$ = $f_1 - ((\gamma_{31,151} (\phi_{31,51}(f_1))) \wedge f_1)$), et on reconstruit l'image mise à plat par différence ($f_1$) à partir des marqueurs contenus dans l'image filtrée ($f_2$) pour former une image filtrée reconstruite ( $f_3 = R_{f_1}^{\delta} \left( f_2 \right).$

   D- à l'aide d'éléments structurant de tailles, de formes et d'orientation données, on transforme successivement l'image filtrée reconstruite ($f_3$) par une série de top-hat avec filtrage pour obtenir une série d'images mises à plat filtrées ( $f_4 = FTH(f_3)$, $f_5 = FTH(f_4)$, $f_6 = FTH(f_5)$),

E- on réalise un seuillage de la dernière image ($f_6$) de la série d'images mises à plat filtrées obtenue à l'issue de l'étape D pour obtenir une image segmentée ($T_{<1,30>}$ ($f_6$) = $seg_1$), de sorte que les éléments en relief apparaissent en blanc sur fond noir.

2. Méthode d'extraction selon la revendication 1, dans laquelle, préalablement à l'étape B, on déroule l'image de la surface dans un repère orthogonal (OXY) dans lequel l'axe des abscisses (OX) représente les valeurs circonférentielles, et l'axe des ordonnées (OY) représente les valeurs radiales.

3. Méthode d'extraction selon la revendication 1 ou 2, dans laquelle l'élément structurant utilisé à l'étape B a une forme linéaire ou a la forme d'un rectangle, dont la taille est choisie de sorte que la longueur de l'élément structurant linéaire ou le grand coté du rectangle, orientés dans la direction circonférentielle, comprenne un nombre de pixels correspondant à une longueur comprise entre 4 mm et 15 mm, et que le petit coté du rectangle comprenne un nombre de pixels correspondant à une longueur comprise entre 0,1 mm et 0,3 mm.

4. Méthode d'extraction selon l'une des revendications 1 à 3, dans laquelle :

- le premier élément structurant utilisé à l'étape C pour l'opération morphologique de fermeture a la forme d'un rectangle, dont la taille est choisie de sorte que le grand coté du rectangle, orienté dans le sens circonférentiel, comprenne un nombre de pixels correspondant à une longueur comprise entre 1 mm et 5 mm, et que le petit côté du rectangle comprenne un nombre de pixels correspondant à une longueur comprise entre 1 mm et 2 mm, et
- le second élément structurant utilisé à l'étape C pour l'opération morphologique d'ouverture a la forme d'un rectangle, dont la taille est choisie de sorte que le grand côté du rectangle, orienté dans le sens circonférentiel, comprenne un nombre de pixels correspondant à une longueur comprise entre 4 mm et 15 mm, et que le petit côté du rectangle comprenne un nombre de pixels correspondant à une longueur comprise entre 1 mm et 2 mm.

5. Méthode d'extraction selon l'une des revendications 1 à 4, dans laquelle au cours de l'étape D les éléments structurants ont une forme linéaire ou la forme d'un rectangle, et sont orientés dans la direction circonférentielle ou radiale.

6. Méthode d'extraction selon la revendication 5, dans laquelle la taille des éléments structurant est choisie de sorte que le petit coté du rectangle comprenne un nombre de pixels correspondant à une longueur comprise entre 0,1 mm et 2 mm, et que le grand coté du rectangle, ou que la longueur de l'élément structurant linéaire, comprenne un nombre de pixels correspondant à une longueur comprise entre 0,3 mm et 15 mm.

7. Méthode d'extraction selon l'une des revendications 1 à 6, dans laquelle, au cours de l'étape E, on effectue un seuillage du niveau de gris correspondant à une variation de hauteur supérieure ou égale à 0,15 mm.

8. Méthode d'extraction selon l'une des revendications 1 à 7, dans laquelle, à l'issue de l'étape E, on définit des facteurs de forme des éléments apparaissant en blanc sur l'image segmentée.

9. Méthode d'extraction selon la revendication 8, dans laquelle on ne conserve que les objets dont les facteurs de forme correspondent à des valeurs prédéterminées.

10. Méthode d'extraction selon la revendication 9, dans laquelle les facteurs de formes sont l'orientation angulaire principale ($\alpha$) de la forme, et/ou l'aire de la forme, et/ou l'excentricité d'une ellipse englobant ladite forme.

11. Méthode d'extraction selon l'une des revendications 8 à 10, dans laquelle, préalablement à la recherche des facteurs de forme, on augmente circonférentiellement l'image segmentée ($seg_1$, $seg_6$) d'une zone de recouvrement ($seg^{recouvrement}$) correspondant à un secteur angulaire de longueur prédéfinie et partant de l'origine (O).

12. Méthode d'extraction selon l'une des revendications 1 à 11, dans laquelle la surface considérée est la surface intérieure du pneumatique, et les éléments en relief sont des stries.


**Patentansprüche**

1. Verfahren zum Extrahieren der Reliefelemente an der Oberfläche eines Luftreifens, das die Schritte enthält, während denen:

A- das dreidimensionale Bild der Fläche erfasst wird, indem jedem Pixel (i, j) des Bilds ein Graupegelwert proportional zur topographischen Erhebung dieses Punkts zugewiesen wird, um ein Ausgangsbild ($f$) zu erhalten,

B- mit Hilfe eines Strukturelements das Ausgangsbild ($f$) durch einen ersten Zylinderhut transformiert wird, um durch Differenz ($f_1 = f - \gamma_{3,151}$ ($f$)) ein verflachtes Bild ($f_1$) zu erhalten,

C- mit Hilfe eines ersten und eines zweiten Strukturelements das durch Differenz verflachte Bild ($f_1$) durch einen zweiten Zylinderhut mit Filterung transformiert wird, um ein gefiltertes Bild zu erhalten, das als Markierung dient ($f_2 = FTH(f_1) = f_1 - ((\gamma_{31,151} (\phi_{31,51}(f_1))) \wedge {}_f 1)$), und das durch Differenz verflachte Bild ($f_1$) ausgehend von den im gefilterten Bild ($f_2$) enthaltenen Markierungen rekonstruiert wird, um ein rekonstruiertes gefiltertes Bild

$$(f_3 = R_{f_1}^{\delta} (f_2)) \text{ zu bilden,}$$

D- mit Hilfe von Strukturelementen gegebener Größen, Formen und Ausrichtung das rekonstruierte gefilterte Bild ($f_3$) nacheinander durch eine Reihe von Zylinderhüten mit Filterung transformiert wird, um eine Reihe von gefilterten verflachten Bildern ($f_4 = FTH(f_3)$, $f_5 = FTH(f_4)$, $f_6 = FTH(f_5)$) zu erhalten,

E- ein Schwellenwertvergleich des letzten Bilds ($f_6$) der am Ende des Schritts D erhaltenen Reihe von gefilterten verflachten Bildern durchgeführt wird, um ein segmentiertes Bild ($T_{<1,30>}$ ($f_6$) = sege$_1$) zu erhalten, so dass die Reliefelemente weiß auf schwarzem Grund erscheinen.

2. Extraktionsverfahren nach Anspruch 1, wobei vor dem Schritt B das Bild der Fläche in einem orthogonalen Koordinatensystem (OXY) abgewickelt wird, in dem die Abszissenachse (OX) die Umfangswerte und die Koordinatenachse (OY) die radialen Werte darstellt.

3. Extraktionsverfahren nach Anspruch 1 oder 2, wobei das im Schritt B verwendete Strukturelement eine lineare Form oder die Form eines Rechtecks hat, dessen Größe so gewählt wird, dass die Länge des linearen Strukturelements oder die große Seite des Rechtecks, die in Umfangsrichtung ausgerichtet sind, eine Anzahl von Pixeln enthält, die einer Länge zwischen 4 mm und 15 mm entspricht, und dass die kleine Seite des Rechtecks eine Anzahl von Pixeln enthält, die einer Länge zwischen 0,1 mm und 0,3 mm entspricht.

4. Extraktionsverfahren nach einem der Ansprüche 1 bis 3, wobei:

- das im Schritt C für den morphologischen Schließvorgang verwendete erste Strukturelement die Form eines Rechtecks hat, dessen Größe so gewählt wird, dass die in Umfangsrichtung ausgerichtete große Seite des Rechtecks eine Anzahl von Pixeln enthält, die einer Länge zwischen 1 mm und 5 mm entspricht, und dass die kleine Seite des Rechtecks eine Anzahl von Pixeln enthält, die einer Länge zwischen 1 mm und 2 mm entspricht, und

- das im Schritt C für den morphologischen Öffnungsvorgang verwendete zweite Strukturelement die Form eines Rechtecks hat, dessen Größe so gewählt wird, dass die in Umfangsrichtung ausgerichtete große Seite des Rechtecks eine Anzahl von Pixeln enthält, die einer Länge zwischen 4 mm und 15 mm entspricht, und dass die kleine Seite des Rechtecks eine Anzahl von Pixeln enthält, die einer Länge zwischen 1 mm und 2 mm entspricht.

5. Extraktionsverfahren nach einem der Ansprüche 1 bis 4, wobei während des Schritts D die Strukturelemente eine lineare Form oder die Form eines Rechtecks haben und in Umfangsrichtung oder in radialer Richtung ausgerichtet sind.

6. Extraktionsverfahren nach Anspruch 5, wobei die Größe der Strukturelemente so gewählt wird, dass die kleine Seite des Rechtecks eine Anzahl von Pixeln enthält, die einer Länge zwischen 0,1 mm und 2 mm entsprechen, und dass die große Seite des Rechtecks oder die Länge des linearen Strukturelements eine Anzahl von Pixeln enthält, die einer Länge zwischen 0,3 mm und 15 mm entspricht.

7. Extraktionsverfahren nach einem der Ansprüche 1 bis 6, wobei während des Schritts E ein Schwellenwertvergleich des Graupegels durchgeführt wird, der einer Höhenabweichung von mehr als oder gleich 0,15 mm entspricht.

8. Extraktionsverfahren nach einem der Ansprüche 1 bis 7, wobei nach dem Schritt E Formfaktoren der Elemente definiert werden, die auf dem segmentierten Bild weiß erscheinen.

9. Extraktionsverfahren nach Anspruch 8, wobei nur die Objekte behalten werden, deren Formfaktoren vorbestimmten Werten entsprechen.

**10.** Extraktionsverfahren nach Anspruch 9, wobei die Formfaktoren die Hauptwinkelausrichtung ($\alpha$) der Form und/oder die Fläche der Form und/oder die Exzentrizität einer die Form umfassenden Ellipse sind.

**11.** Extraktionsverfahren nach einem der Ansprüche 8 bis 10, wobei vor der Suche nach den Formfaktoren das segmentierte Bild ($seg_1$, $seg_6$) in Umfangsrichtung um einen Abdeckungsbereich ($seg^{Abdeckung}$) vergrößert wird, der einem Winkelsektor vordefinierter Länge und ausgehend vom Ausgangspunkt (O) entspricht.

**12.** Extraktionsverfahren nach einem der Ansprüche 1 bis 11, wobei die betrachtete Fläche die Innenfläche des Luftreifens ist und die Reliefelemente Rillen sind.

**Claims**

**1.** Method of extraction of the relief elements featuring on the surface of a tyre comprising the steps in the course of which:

A- the three-dimensional image of the said surface is captured while assigning to each pixel (i, j) of the image a grey level value proportional to the topographic elevation of this point, so as to obtain a starting image ($f$),

B- with the aid of a structuring element, the starting image ($f$) is transformed by a first top-hat, so as to obtain an image ($f_1$) flattened by differencing, ( $f_1 = f - \gamma_{3,151}(f)$),

C- with the aid of a first and of a second structuring element, the image flattened by differencing ($f_1$) is transformed by a second top-hat with filtering so as to obtain a filtered image acting as marker ( $f_2 = FTH(f_1) = f_1 - ((\gamma_{31,151}(\phi_{31,51}(f_1)) \wedge f_1))$ ), and the image flattened by differencing ($f_1$) is reconstructed on the basis of the markers contained in the filtered image ($f_2$) so as to form a reconstructed filtered image $\left( f_3 = R_{f_1}^{\delta}\left( f_2 \right) \right)$.

D- with the aid of structuring elements of given sizes, shapes and orientation, the reconstructed filtered image ($f_3$) is transformed successively by a series of top-hat with filtering so as to obtain a series of filtered flattened images ( $f_4 = FTH(f_3)$, $f_5 = FTH(f_4)$, $f_6 = FTH(f_5)$),

E- a thresholding of the last image ($f_6$) of the series of filtered flattened images obtained on completion of step D is carried out so as to obtain a segmented image ($T_{<1,30>}(f_6) = seg_1$), so that the relief elements appear white on a black background.

**2.** Method of extraction according to Claim 1, in which, prior to step B, the image of the surface is unfolded in an orthogonal reference frame (OXY) in which the abscissa axis (OX) represents the circumferential values, and the ordinate axis (OY) represents the radial values.

**3.** Method of extraction according to Claim 1 or 2, in which the structuring element used in step B has a linear shape or has the shape of a rectangle, whose size is chosen so that the length of the linear structuring element or the large side of the rectangle, oriented in the circumferential direction, comprises a number of pixels corresponding to a length lying between 4 mm and 15 mm, and that the small side of the rectangle comprises a number of pixels corresponding to a length lying between 0.1 mm and 0.3 mm.

**4.** Method of extraction according to one of Claims 1 to 3, in which:

- the first structuring element used in step C for the morphological closing operation has the shape of a rectangle, whose size is chosen so that the large side of the rectangle, oriented in the circumferential sense, comprises a number of pixels corresponding to a length lying between 1 mm and 5 mm, and that the small side of the rectangle comprises a number of pixels corresponding to a length lying between 1 mm and 2 mm, and
- the second structuring element used in step C for the morphological opening operation has the shape of a rectangle, whose size is chosen so that the large side of the rectangle, oriented in the circumferential sense, comprises a number of pixels corresponding to a length lying between 4 mm and 15 mm, and that the small side of the rectangle comprises a number of pixels corresponding to a length lying between 1 mm and 2 mm.

**5.** Method of extraction according to one of Claims 1 to 4, in which in the course of step D the structuring elements have a linear shape or the shape of a rectangle, and are oriented in the circumferential or radial direction.

**6.** Method of extraction according to Claim 5, in which the size of the structuring elements is chosen so that the small side of the rectangle comprises a number of pixels corresponding to a length lying between 0.1 mm and 2 mm, and that the large side of the rectangle, or that the length of the linear structuring element, comprises a number of pixels corresponding to a length lying between 0.3 mm and 15 mm.

7. Method of extraction according to one of Claims 1 to 6, in which, in the course of step E, a thresholding of the grey level corresponding to a height variation of greater than or equal to 0.15 mm is performed.

8. Method of extraction according to one of Claims 1 to 7, in which, on completion of step E, shape factors of the elements appearing in white on the segmented image are defined.

9. Method of extraction according to Claim 8, in which only the objects whose shape factors correspond to predetermined values are preserved.

10. Method of extraction according to Claim 9, in which the shape factors are the principal angular orientation ($\alpha$) of the shape, and/or the area of the shape, and/or the eccentricity of an ellipse encompassing the said shape.

11. Method of extraction according to one of Claims 8 to 10, in which, prior to the search for the shape factors, the segmented image ($seg_1$, $seg_6$) is circumferentially increased by an overlap zone ($seg^{overlap}$) corresponding to an angular sector of predefined length and starting from the origin (O).

12. Method of extraction according to one of Claims 1 to 11, in which the surface considered is the interior surface of the tyre, and the relief elements are striations.

**Fig 1**

**Fig 2**    S

$$f_1 = TH(f) = f - \gamma_{3,151}^h(f)$$

**Fig 3**

$$f_2 = FTH(f_1) = f_1 - \left[ \gamma_{31,151} \phi_{31,51}(f_1) \wedge f_1 \right]$$

**Fig 4**

$$f_3 = R_{f_1}^{\delta}(f_2)$$

**Fig 5**

$$f_4 = FTH(f_3) = f_3 - \left\lfloor \gamma_{31,151}\phi_{31,51}(f_3) \wedge f_3 \right\rfloor$$

**Fig 6**

$$f_5 = FTH(f_4) = f_4 - \left[ \gamma^v_{201,3}\phi^v_{11,3}(f_4) \wedge f_4 \right]$$

**Fig 7**

$$f_6 = FTH(f_5) = f_5 - \left\lfloor \gamma^h_{1,151}\phi^h_{1,151}(f_5) \wedge f_5 \right\rfloor$$

**Fig 8**

$$T_{<1,30>}(f_6) = seg_1$$

Fig 9

Image 3D

$(f)$

Premier top-hat pour mise à plat

$$f_1 = f - \gamma_{3,150}(f)$$

Deuxième top-hat avec filtrage

$$f_2 = FTH(f_1) = f_1 - \left(\left(\gamma_{31,151}\left(\phi_{31,51}(f_1)\right)\right)\wedge f_1\right)$$

Reconstruction de $f_1$ à partir de $f_2$

$$f_3 = R_{f_1}^{\delta}(f_2)$$

Troisième top-hat avec filtrage

$$f_4 = FTH(f_3) = f_3 - \left(\left(\gamma_{31,151}^{h}\left(\phi_{31,51}^{h}(f_3)\right)\right)\wedge f_3\right)$$

Quatrième top-hat avec filtrage pour supprimer les bosses

$$f_5 = FTH(f_4) = f_4 - \left(\left(\gamma_{201,3}^{v}\left(\phi_{11,3}^{v}(f_4)\right)\right)\wedge f_4\right)$$

Cinquième top-hat avec filtrage pour corriger le résidu de bombé radial

$$f_6 = FTH(f_5) = f_5 - \left(\left(\gamma_{1,151}^{h}\left(\phi_{1,151}^{v}(f_5)\right)\right)\wedge f_5\right)$$

Seuillage

$$T_{<1,30>}(f_6) = seg_6$$

Extraction des zones de recouvrement

$$seg^{recouvrement}$$

Suppression des objets ne correspondant pas aux facteurs de forme préétablis

Etape A

Etape B

Etape C

Etape D

Etape E

**Fig 10**